# DEMANDE DE BREVET EUROPEEN

(11) **EP 3 952 080 A1**
(43) Date de publication de la demande: **09.02.2022**
(21) Numéro de dépôt: 21189529.7
(22) Date de dépôt: 03.08.2021
(51) Int. Cl.: H02K 47/04, H02K 49/10, H02K 11/01

(54) **GÉNÉRATEUR MAGNÉTIQUE ET SYSTÈME DE GÉNÉRATION ÉLECTRIQUE COMPRENANT UN TEL GÉNÉRATEUR**

(30) Priorité: 03.08.2020 FR 2008238; 09.03.2021 FR 2102284
(71) Demandeur: Cecen, Arif, 75015 Paris (FR)
(72) Inventeur: Cecen, Arif, 75015 Paris (FR)
(74) Mandataire: Touroude & Associates

(57) **Abrégé**

L'invention concerne un générateur magnétique (1) comprenant au moins un moyen d'entrainement rotatif (2) ayant un axe associé à un système d'actionneur, le système d'actionneur comprenant au moins un rotor inducteur (5) associé à l'axe du moyen d'entrainement rotatif (2), le rotor inducteur (5) comprenant des structures magnétiques inductrices (6), le rotor inducteur (5) étant associé à au moins un rotor induit (7) comprenant des structures magnétiques induites (8) configurées pour coopérer avec les structures magnétiques inductrices (6) de sorte que les structures magnétiques inductrices (6) entrainées par le rotor inducteur (5) entrainent une rotation des structures induites (7) et du rotor induit (6), ledit rotor induit (6) étant associé à un moyen de génération d'énergie électrique (9).

L'invention concerne en outre un système de génération électrique comprenant un tel générateur magnétique.

## Description

L'invention se rapporte au domaine des générateurs d'énergie, en particulier pour produire de l'énergie électrique à partir d'une énergie initiale, et l'acheminer vers un réseau électrique.

Dans ce domaine, il est connu de proposer des générateurs comprenant un système rotatif associé à un moyen de type dynamoélectrique pour produire du courant à partir des mouvements du système rotatif.

Malheureusement, ces générateurs nécessitent des transmissions de mouvements par des moyens mécaniques impliquant des frottements et donc des rendements non satisfaisants.

Ainsi, un objectif de la présente invention est de proposer un générateur ayant un meilleur rendement que les actionneurs de l'art antérieur, notamment en limitant les frottements lors des transmissions de mouvements.

Un deuxième objectif est de proposer un générateur de constitution simple et ayant un long cycle de vie.

Pour atteindre ces objectifs, l'invention concerne un générateur magnétique comprenant au moins un moyen d'entrainement rotatif ayant un axe associé à un système d'actionneur, le système d'actionneur comprenant au moins un rotor inducteur associé à l'axe du moyen d'entrainement rotatif, le rotor inducteur comprenant des structures magnétiques inductrices, le rotor inducteur étant associé à au moins un rotor induit comprenant des structures magnétiques induites configurées pour coopérer avec les structures magnétiques inductrices de sorte que les structures magnétiques inductrices entrainées par le rotor inducteur entrainent une rotation des structures induites et du rotor induit, ledit rotor induit étant associé à un moyen de génération d'énergie électrique.

Avantageusement, l'utilisation du moteur et des structures magnétiques permet de simplifier les engrenages.

En outre, l'utilisation des aimants permet d'avoir des mouvements d'entrainement sans frottement entre les rotors.

De plus, l'utilisation de rotors et structures aimantées permet de réaliser un générateur de constitution simple et ayant un long cycle de vie.

Selon d'autres aspects pris isolément, ou combinés selon toutes les combinaisons techniquement réalisables :
- au moins un axe d'au moins un rotor ou moteur est monté sur le reste du générateur au moyen de buttées magnétiques ; et/ou
- le générateur magnétique comprend au moins deux rotors induits associés entre eux comprenant des structures magnétiques induites configurées pour coopérer entre elles de sorte que les structures magnétiques induites d'au moins un premier rotor induit entrainent une rotation des structures magnétiques induites d'au moins un deuxième rotor induit, lesdits rotors induits étant chacun associé à un moyen de génération d'énergie électrique ; et/ou
- le générateur magnétique comprend au moins une structure de cage de Faraday en amont et en aval des structures magnétiques ; et/ou
- le générateur magnétique comprend au moins un moyen de génération de vide au moins autour du système d'actionneur ; et/ou
- les structures magnétiques comprennent des aimants permanents, en particulier à base de néodyme ; et/ou
- les structures magnétiques sont agencées en cylindre comportant des éléments magnétiques sur la surface de révolution ; et/ou
- les structures magnétiques coopérant ensemble sont configurées pour se repousser l'une l'autre ; et/ou
- le moyen de génération d'énergie comprend un alternateur par axe de rotor induit, de préférence associé à un système de contrôleur et onduleur ; et/ou
- le générateur magnétique comprend deux moteurs associés à deux rotors inducteurs ; et/ou
- ledit moyen d'entrainement rotatif comprend au moins un moteur, de préférence alimenté par une batterie ; et/ou
- le générateur magnétique comprend deux moteurs associés à deux rotors inducteurs.

Un autre objet de l'invention concerne un système de génération électrique comprenant un générateur magnétique selon l'invention connecté à un appareillage de production d'énergie électrique qui comprend ledit moyen d'entrainement rotatif.

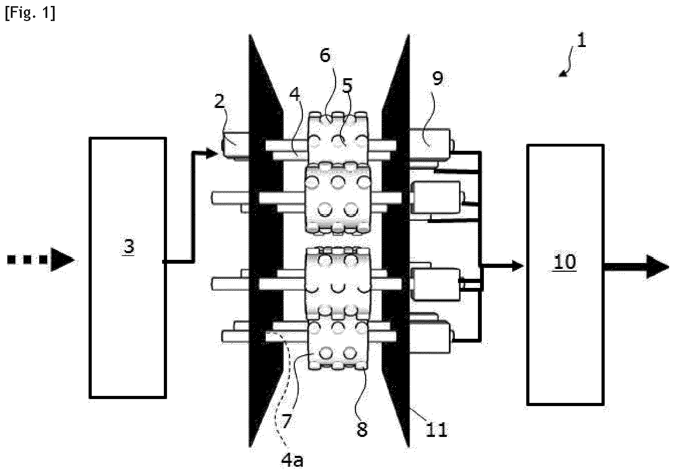

L'invention sera davantage détaillée par la description de modes de réalisation non-limitatifs, et sur la base des figures annexées, dans lesquelles
[Fig.1] illustre schématiquement une vue de côté d'un générateur magnétique selon une première variante préférée de l'invention ;

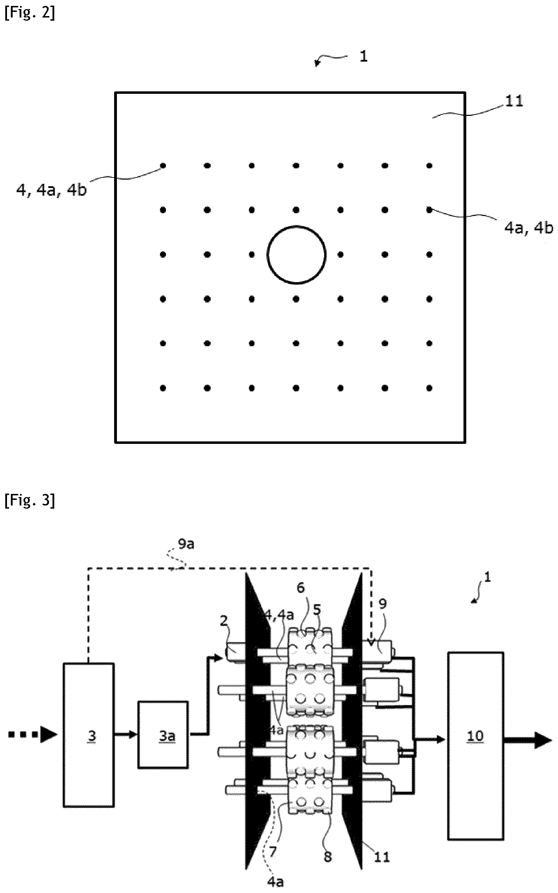

[Fig.2] illustre schématiquement une vue de face du générateur magnétique de la figure 1 ;
[Fig.3] illustre schématiquement une vue de côté d'un générateur magnétique selon une deuxième variante préférée de l'invention ;

L'invention concerne un générateur d'énergie 1, en particulier pour produire de l'énergie électrique et l'acheminer vers un réseau électrique.

Il s'agit d'un générateur magnétique 1, à savoir un générateur mettant à profit les forces magnétiques. On pourra parler d'un système d'engrenage planétaire magnétique relié à un multi-générateur électrique, ou plus simplement d'engrenage magnétique.

Le générateur 1 comprend d'au moins un moyen d'entrainement rotatif 2. Dans une variante préférée, il s'agit d'au moins un moteur. Selon la variante utilisée, le générateur peut comprendre plus d'un moteur. Le moteur est ici un moteur électrique associé à une batterie rechargeable 3. L'axe 4 du moteur est associé à un système d'actionneur. La batterie 3 est rechargée de temps en temps sur secteur.

Le générateur peut comprendre un contrôleur de tension 3a (ou régulateur de tension) permettant de maintenir une tension constante. Ainsi, le courant arrivant est moins dépendant de l'état de charge de la batterie 3.

Le système d'actionneur comprend au moins un rotor inducteur 5 associé à l'axe du moteur 4. En particulier, le rotor inducteur 5 est fixé à l'axe du moteur 4. Le moteur transfère son couple à un rotor inducteur.

Le rotor inducteur 5 comprend des structures magnétiques inductrices 6. Il s'agit en particulier d'aimants permanents à base de Néodyme (NdFeB). Plus particulièrement, le générateur 1 est composé d'un ensemble de rotors magnétiques homogènes, montés en particulier en boucle fermée, c'est-à-dire avec des structures magnétiques à la fois induites et inductrices. Dans la variante préférée les rotors sont des cylindres identiques intégrant des aimants. Les cylindres peuvent être en polymère pour limiter les couts de fabrication, mais d'autres matériaux peuvent être utilisés tels que l'aluminium, la fibre de carbone ou matériaux non-ferreux.

Le rotor inducteur 5 est associé à au moins un rotor induit 7 comprenant des structures magnétiques induites 8. Le rotor induit 7 peut être du même type que le rotor inducteur 5. Les structures magnétiques induites 8 du rotor induit 7 sont configurées pour coopérer avec les structures magnétiques inductrices 6 du rotor inducteur 5 de sorte que les structures magnétiques inductrices 6 entrainées par le rotor inducteur 5 entrainent une rotation des structures induites 8 et du rotor induit 7.

En particulier, la coopération se fait par le biais de forces magnétiques. Dans la variante préférée, les structures magnétiques 6, 8 se repoussent de sorte à créer et transférer une force de rotation grâce à la structure cylindrique où une poussée et une traction sont exercées.

Avantageusement, l'utilisation du moteur 2 et des structures magnétiques 6, 8 permet de simplifier les engrenages par absence de contact.

De préférence, le ou les axes 4a d'au moins une, de préférence de toutes les structures rotatives, à savoir les rotors inducteur 5 et induits 7, et de préférence l'axe 4 du moteur 2, sont montés sur le reste du générateur 1 au moyen de buttées magnétiques 4b (ou roulements magnétiques). Il s'agit de structures incluant un champ magnétique dans un roulement de sorte à ne pas avoir de frottement entre les pièces rotatives du roulement. Avantageusement, les buttées magnétiques 4b permettent d'améliorer l'efficacité du système en limitant les pertes d'énergies par frottements.

En outre, l'utilisation des aimants permet d'avoir des mouvements d'entrainement sans frottement entre les rotors 5, 7.

De plus, l'utilisation de rotors et structures aimantées permet de réaliser un générateur de constitution simple et ayant un long cycle de vie. En effet, le cycle de vie des propriétés magnétiques prévoie une durée moyenne de 25 ans, ce qui correspond au cycle de vie du générateur 1.

Un montage en boucle fermée permet à chaque rotor d'être à la fois un élément d'entrainement et un élément entrainé.

A titre d'exemple non-limitatif, l'arbre dans le cylindre (5, 7) a une épaisseur d'environ 10 mm ; la longueur du cylindre (5, 7) est d'environ 100 mm ; la largeur du cylindre (5, 7) est d'environ 70 mm.

Le générateur 1 illustré comporte 8 cylindres (5, 7). L'agencement des aimants dans un bloc peut être par 4 groupes de 3 ou 2 rangées. Le nombre d'aimants sur le bloc peut être de 20.

A titre d'exemple non-limitatif, le diamètre des aimants est d'environ 10 mm ; l'épaisseur des aimants est d'environ 5 mm ; la distance entre les aimants du bloc est d'environ 21 mm (à partir de la circonférence).

Le générateur 1 peut peser environ 100 kg. Par conséquent, il peut être transportable et être utilisé directement.

Ledit rotor induit 7 est associé à un moyen de génération d'énergie électrique 9. En particulier, huit alternateurs (9), sont connectés à chaque axe central en sortie. De préférence, il s'agit d'alternateurs triphasés avec un système de redressement. Le générateur peut comprendre un courant d'excitation 9a de la batterie vers un ou plusieurs alternateurs 9.

L'énergie électrique correspondante, véhiculée en autant de flux en courant continu que de rotors équipés en alternateur, est acheminée vers un contrôleur central 10 (contrôleur de charge).

Dans la variante préférée, le contrôleur 10 réalise une intégration desdits flux électriques, puis fournit en sortie un ou plusieurs flux en courant continu distincts en particulier en direction d'un réseau électrique.

Le contrôleur 10 peut être associé à un onduleur 10a de sorte à obtenir un courant alternatif en sortie.

Selon une variante, le générateur magnétique 1 comprend au moins deux rotors induits 7 associés entre eux. Les rotors induits 7 comprennent des structures magnétiques induites 8 configurées pour coopérer entre elles de sorte que les structures magnétiques induites 8 d'au moins un premier rotor induit 7 entrainent une rotation des structures magnétiques induites 8 d'au moins un deuxième rotor induit 7. En outre, lesdits rotors induits 7 sont chacun associés à un moyen de génération d'énergie électrique 9, en particulier un alternateur. Cela se répète pour le rotor induit suivant.

Avantageusement, cet agencement permet de transmettre les effets d'un seul moyen d'entrainement rotatif par un système d'engrenage sans contact et donc sans frottement. Selon l'utilisation souhaitée, les rotors peuvent être de tailles différentes.

Les axes des rotors peuvent être sensiblement parallèles.

Selon une variante, le générateur magnétique comprend au moins une structure de cage de Faraday 11 en amont et en aval des structures magnétiques. En particulier, les rotors 4, 4a sont montés directement sur des panneaux de cage de Faraday 11 au moyen desdites butées magnétiques 4b.

Avantageusement, une cage de Faraday 11 permet de maintenir les champs dans le générateur et de ne pas perturber les éléments externes au générateur qui sont sensibles aux champs magnétiques.

Selon une variante, le générateur magnétique comprend au moins un moyen de génération de vide au moins autour du système d'actionneur.

Avantageusement, cela permet de limiter les frottements de l'air et d'augmenter l'efficacité du générateur.

En particulier, les rotors magnétiques sont intégrés dans une cage de Faraday sous vide afin d'éviter tout contact avec un environnement extérieur. L'air pouvant être assimilé à une force mécanique est aussi éliminé du système.

Dans le cas de cylindres identiques ceux-ci transmettent leur couple avec efficacité entre eux avec un rendement important.

### Exemple :

Un générateur selon l'invention peut être prévu avec un ou deux moteurs (2) fonctionnant avec une batterie en CC de 12 V ou 24 V ou 48 V.

Les cylindres rotatifs 5, 7 sont composés de 16-17 pièces 6, 8. Dans le modèle actuel, les alternateurs connectés aux cylindres 5, 7 produisent 12/24/48 V CC sous l'effet de la rotation. Chaque alternateur génère une puissance de 1 kW pour un total de 6-8 kW d'électricité.

L'électricité produite est dirigée vers un onduleur CC / CA véhiculée par des circuits intégrés. Les batteries connectées aux moteurs sont prises en charge par un contrôleur central. L'électricité 230/320 V CA est délivrée par un onduleur prêt à l'emploi.

Dans un autre mode de réalisation, l'invention est un système de génération électrique basé sur appareillage de production d'énergie électrique, pouvant être une éolienne ou une turbine de générateur mécanique. Dans ce cas, la turbine forme le, ou est complémentaire au moyen d'entrainement rotatif 2 du générateur selon l'invention, qui entraine le rotor inducteur 5.

Avantageusement, cela permet de décupler la productivité de l'appareillage de production.

## Revendications

1. Générateur magnétique (1) comprenant au moins un moyen d'entrainement rotatif (2) ayant un axe associé à un système d'actionneur, le système d'actionneur comprenant au moins un rotor inducteur (5) associé à l'axe du moyen d'entrainement rotatif (2), le rotor inducteur (5) comprenant des structures magnétiques inductrices (6), le rotor inducteur (5) étant associé à au moins un rotor induit (7) comprenant des structures magnétiques induites (8) configurées pour coopérer avec les structures magnétiques inductrices (6) de sorte que les structures magnétiques inductrices (6) entrainées par le rotor inducteur (5) entrainent une rotation des structures induites (7) et du rotor induit (6), ledit rotor induit (6) étant associé à un moyen de génération d'énergie électrique (9).

2. Générateur magnétique (1) selon la revendication précédente, **caractérisé en ce qu'**au moins un axe (4, 4a) d'au moins un rotor (7, 8) ou moteur (2) est monté sur le reste du générateur (1) au moyen de buttées magnétiques (4b).

3. Générateur magnétique (1) selon l'une des revendications précédentes comprenant au moins deux rotors induits (7) associés entre eux comprenant des structures magnétiques induites (8) configurées pour coopérer entre elles de sorte que les structures magnétiques induites (8) d'au moins un premier rotor induit (7) entrainent une rotation des structures magnétiques induites (8) d'au moins un deuxième rotor induit (7), lesdits rotors induits (7) étant chacun associé à un moyen de génération d'énergie électrique (9).

4. Générateur magnétique (1) selon l'une des revendications précédentes comprenant au moins une structure de cage de Faraday (11) en amont et en aval des structures magnétiques (6, 8).

5. Générateur magnétique (1) selon l'une des revendications précédentes comprenant au moins un moyen de génération de vide au moins autour du système d'actionneur.

6. Générateur magnétique (1) selon l'une des revendications précédentes, **caractérisé en ce que** les structures magnétiques (6, 8) comprennent des aimants permanents, en particulier à base de néodyme.

7. Générateur magnétique (1) selon la revendication précédente, **caractérisé en ce que** les structures magnétiques (6, 8) sont agencées en cylindre comportant des éléments magnétiques sur la surface de révolution.

8. Générateur magnétique (1) selon l'une des revendications précédentes, **caractérisé en ce que** les structures magnétiques (6, 8) coopérant ensemble sont configurées pour se repousser l'une l'autre.

9. Générateur magnétique (1) selon l'une des revendications précédentes, **caractérisé en ce que** le moyen de génération d'énergie comprend un alternateur par axe de rotor induit, de préférence associé à un système de contrôleur (10) et onduleur.

10. Générateur magnétique (1) selon l'une des revendications précédentes, ledit moyen d'entrainement rotatif comprend au moins un moteur, de préférence alimenté par une batterie (3).

11. Générateur magnétique (1) selon la revendication précédente, comprenant deux moteurs (2) associés à deux rotors inducteurs (5).

12. Système de génération électrique comprenant un générateur magnétique selon l'une des revendications précédentes, connecté à un appareillage de production d'énergie électrique comprenant ledit moyen d'entrainement rotatif (2).
